Europäisches Patentamt

European Patent Office

Office européen des brevets

(19)

(11) Numéro de publication : **0 442 233 A1**

(12) # DEMANDE DE BREVET EUROPEEN

(21) Numéro de dépôt : **90403649.8**

(22) Date de dépôt : **18.12.90**

(51) Int. Cl.⁵ : **C08L 23/04, // (C08L23/04, 23:08)**

(30) Priorité : **27.12.89 FR 8917240**

(43) Date de publication de la demande :
**21.08.91 Bulletin 91/34**

(84) Etats contractants désignés :
**AT BE DE ES FR GB IT NL SE**

(71) Demandeur : **ATOCHEM**
**4 & 8, Cours Michelet La Défense 10**
**F-92800 Puteaux (FR)**

(72) Inventeur : **Seguela, Brigitte**
**291 Chemin d'En Bas**
**F-62232 Hinges (FR)**
Inventeur : **Kaifasz, Patrick**
**19, Rue Felix Eboue**
**F-62300 Lens (FR)**

(74) Mandataire : **Foiret, Claude et al**
**ATOCHEM Département Propriété Industrielle**
**F-92091 Paris la Défense 10 Cédex 42 (FR)**

(54) **Compositions comprenant des copolymères d'éthylène.**

(57)    Compositions comprenant au moins 60% en poids d'au moins un copolymère (A) d'éthylène et d'au moins une alpha-oléfine comportant de 3 à 10 atomes de carbone, et au plus 40% en poids d'au moins un copolymère (B) à base d'éthylène et d'au moins un anhydride d'acide dicarboxylique insaturé, caractérisées en ce que :
    — le copolymère (A) possède une densité comprise entre 0,850 et 0,890,
    — le copolymère (B) comprend au moins 80% en moles de motifs dérivés de l'éthylène et au moins 0,1% en moles de motifs dérivés de l'anhydride d'acide dicarboxylique insaturé, et
    — au moins l'une des copolymères (A) et (B) est modifié au moyen d'une quantité efficace soit d'au moins un initiateur de radicaux libres si la modification porte sur le copolymère (A), soit d'au moins un composé capable de réagir avec les fonctions anhydride du copolymère (B).
    Leur procédé de préparation consiste à réaliser une mélange homogène du copolymère (A), du copolymère (B) et de l'initiateur et/ou du composé capable de modifier respectivement le copolymère (A) et le copolymère (B) dans un malaxeur à une température comprise entre 150 à 290°C.
    Articles industriels obtenus par transformation d'une composition ci-dessus.

EP 0 442 233 A1

## COMPOSITIONS COMPRENANT DES COPOLYMERES D'ETHYLENE

La présente invention concerne des compositions comprenant d'une part des copolymères d'éthylène et d'alpha-oléfine(s) et d'autre part des copolymères d'éthylène et de comonomère(s) polaire(s) dans lesquelles au moins un des copolymères est modifié au moyen d'un agent chimique convenable.

Les copolymères d'éthylène et d'au moins une alpha-oléfine sont connus depuis de nombreuses années et connaissent un développement important mais d'autant plus récent que leur densité est plus basse. Ils sont généralement connus sous le nom de "polyéthylène basse densité linéaire" si leur densité est comprise entre environ 0,915 et 0,945, sous le nom de "polyéthylène linéaire de très basse densité" si leur densité est comprise entre environ 0,890 et environ 0,915, et sous le nom de "polyéthylène linéaire d'ultra basse densité" si leur densité est comprise entre environ 0,850 et environ 0,890.

Il est connu que la densité et le taux de cristallinité du copolymère décroissent au fur et à mesure que la teneur en alpha-oléfine(s) augmente. Ceci s'accompagne, pour le copolymère, d'un comportement élastomérique de plus en plus prononcé, le caractère thermoplastique diminuant corrélativement.

Les copolymères d'éthylène et d'au moins une alpha-oléfine, ayant une très basse, et à plus forte raison une ultra basse, densité sont de ce fait susceptibles d'être utilisés dans des applications jusqu'alors réservées aux élastomères complètement amorphes tels que les caoutchoucs d'éthylène et de propylène connus sous le nom d'EPR ou les caoutchoucs d'éthylène, de propylène et d'un diène connus sous le nom d'EPDM.

On a particulièrement envisagé, dans le cadre des recherches ayant conduit à la présente invention, la transformation de copolymères d'éthylène et d'au moins une alpha-oléfine, ayant une très basse ou une ultra basse densité, en pièces d'usure (articles industriels résistant bien à l'abrasion) telles que des semelles de chaussures, des dalles de sol, des tuyaux pour le transport de produits abrasifs. On a constaté qu'il n'était pas possible, pour un copolymère de densité donnée, d'obtenir simultanément une bonne résistance à l'abrasion et une bonne tenue à la flexion alternée. Ainsi les polyéthylènes linéaires de très basse densité ont une bonne résistance à l'abrasion mais ne possèdent aucune tenue à la flexion alternée (ils présentent une rupture après quelques centaines de cycles). La plupart des polyéthylènes linéaires d'ultra basse densité ont une meilleure tenue à la flexion alternée, bien qu'insuffisante pour certaines applications, mais résistent mal à l'abrasion.

Le problème à résoudre par la présente invention est donc la mise au point d'une modification des copolymères d'éthylène et d'alpha-oléfine(s), ayant une très basse ou une ultra basse densité, qui permette d'obtenir des articles industriels ayant simultanément une bonne résistance à l'abrasion et une bonne tenue à la flexion alternée (de préférence au moins 100 000 flexions). Ce problème est résolu par la présente invention qui sera maintenant exposée en détail.

Un premier objet de la présente invention consiste en des compositions comprenant au moins 60% en poids d'au moins un copolymère (A) d'éthylène et d'au moins une alpha-oléfine comportant de 3 à 10 atomes de carbone, et au plus 40% en poids d'au moins un copolymère (B) à base d'éthylène et d'au moins un anhydride d'acide dicarboxylique insaturé, caractérisées en ce que :

– le copolymère (A) possède une densité comprise entre 0,850 et 0,890,

– le copolymère (B) comprend au moins 80% en moles de motifs dérivés de l'éthylène et au moins 0,1% en moles de motifs dérivés de l'anhydride d'acide dicarboxylique insaturé, et

– au moins l'un des copolymères (A) et (B) est modifié au moyen d'une quantité efficace soit d'au moins un initiateur de radicaux libres si la modification porte sur le copolymère (A), soit d'au moins un composé capable de réagir avec les fonctions anhydride du copolymère (B).

Selon la présente invention, on entend par copolymère (A) :

– un caoutchouc polyoléfinique commercialisé par la société MONTEDISON sous la marque DUTRAL®, consistant en un copolymère de 65 à 80% en moles d'éthylène et de 20 à 35% en moles de propylène, ayant une densité de 0,850 à 0,870, ne possédant aucune cristallinité résiduelle et donc pas de température de fusion cristalline, possédant une masse moléculaire géométrique moyenne de 90 à 100 kg/mole et un indice de polydispersité compris entre 2,2 et 2,9.

– un caoutchouc polyoléfinique commercialisé par la société MITSUI sous la marque TAFMER®, consistant en un copolymère de 78 à 92% en moles d'éthylène et de 8 à 22% en moles d'une alpha-oléfine choisie parmi le propylène et le butène-1, ayant une densité de 0,860 à 0,890, ayant un taux de cristallinité résiduelle de 1 à 14%, une température de fusion cristalline J de 75°C, possédant une masse moléculaire géométrique moyenne de 60 à 120 kg/mole et un indice de polydispersité compris entre 2,2 et 2,7.

– un caoutchouc polyoléfinique consistant en un copolymère éthylène/propylène et/ou butène-1, ayant un indice de fluidité compris entre 0,3 et 15 dg/min. environ et une densité comprise entre 0,865 et 0,885 environ, comprenant de 77 à 91% en moles de motifs dérivés de l'éthylène et de 9 à 23% en moles de motifs dérivés du propylène et/ou du butène-1, caractérisé par une température de fusion cristalline J comprise

2

entre 100 et 125°C environ.

Un tel caoutchouc peut être subsidiairement caractérisé par au moins l'un des éléments suivants :
- un indice de polydispersité compris entre 3,5 et 15 environ, de préférence, entre 4 et 8 environ,
- une masse moléculaire géométrique moyenne (définie comme indiqué ci-après) comprise entre 35 et 70 kg/mole environ,
- une relation entre la densité d et la teneur x (exprimée en % en moles) en motifs dérivés du propylène et du butène-1 qui se traduit par la double équation :

$$0,9084 \leqq d + 0,002\,x \leqq 0,918$$

- un taux de cristallinité résiduelle (déterminé selon la méthode décrite ci-après) compris entre 3 et 15% environ.

Par température de fusion cristalline J au sens de la présente invention, on entend la température déterminée au maximum de la courbe de fusion après cristallisation obtenue en soumettant l'échantillon de copolymère au processus en trois étapes suivant :
- fusion à la vitesse de 8°C par minute depuis 10°C jusqu'à 150°C, puis
- cristallisation à la vitesse de 8°C par minute depuis 150°C jusqu'à 10°C, puis à nouveau
- fusion à la vitesse de 8°C par minute depuis 10°C jusqu'à 150°C.

Le taux de cristallinité résiduelle selon la présente invention est déterminé par diffraction des rayons X sur un échantillon de copolymère ayant subi un refroidissement à la vitesse de 5°C par heure depuis 190°C jusqu'à la température ambiante.

La masse moléculaire géométrique moyenne est définie, selon la présente invention, par la relation mathématique :

$$\log_{10} Mg = \sum_{i=1}^{i=N} W_i \, \log_{10} M_i$$

où $W_i$ est la fraction en poids de matière $M_i$ et N est le nombre de fractions éluées par chromatographie sur gel perméable.

De tels copolymères peuvent être obtenus notamment en copolymérisant, à une température de 160 à 270°C environ et sous une pression de 400 à 850 bars environ, un flux gazeux comprenant de 18 à 42% environ en volume d'éthylène et de 58% à 82% en volume d'oléfines (propylène + butène-1) en présence d'un système catalytique de type Ziegler comprenant un activateur organo-aluminium et un composé de métal de transition des groupes IVB, VB, VIB et VIII de la Classification Périodique.

Pour la mise en oeuvre de l'invention, les copolymères (A) sont de préférence sous forme de poudre ou de granulés.

Le copolymère (B) peut être un copolymère non greffé d'éthylène et d'au moins un anhydride d'acide dicarboxylique insaturé, obtenu par copolymérisation des monomères à une température comprise entre 180 et 300°C, sous une pression comprise entre 1000 et 3000 bars, en présence d'un initiateur de radicaux libres et, le cas échéant, d'un agent de transfert tel que le butène-1. Dans ce cas il comprend généralement de 97 à 99,7% en moles de motifs dérivés de l'éthylène et de 0,3 à 3% en moles de motifs dérivés d'anhydride d'acide dicarboxylique insaturé.

Avantageusement le copolymère (B) est un terpolymère (B1) comprenant :
- de 83 à 98,7% environ en moles de motifs dérivés de l'éthylène,
- de 1 à 14% environ en moles de motifs dérivés d'au moins un ester de l'acide acrylique et/ou méthacrylique, et
- de 0,3 à 3% environ en moles de motifs dérivés d'au moins un anhydride d'acide dicarboxylique insaturé.

L'anhydride d'acide dicarboxylique insaturé peut être l'anhydride maléique, l'anhydride citraconique, l'anhydride itaconique, l'anhydride tétrahydrophtalique. On utilise avantageusement l'anhydride maléique.

L'indice de fluidité du copolymère (B), mesuré selon la norme ASTM D 1238 condition E, est avantageusement compris entre 1 et 10 dg/min.

Le terpolymère (B1) peut être obtenu par exemple dans les conditions décrites dans les documents FR-A-2 498 609, FR-A-2 569 411 et FR-A-2 569 412. L'ester de l'acide acrylique ou méthacrylique comporte de préférence un groupe alkyle de 1 à 8 atomes de carbone. A titre d'exemples, on peut citer les acrylates et méthacrylates de méthyle, d'éthyle, de n-propyle, d'iso-propyle, de n-butyle, d'iso-butyle, de n-pentyle, de n-hexyle, d'éthyl-2-hexyle, de n-octyle, de cyclohexyle.

On entend également par copolymère (B) selon l'invention un mélange de 1 à 99% environ en poids d'au moins un copolymère comprenant :

– de 83 à 99,7% environ en moles de motifs dérivés de l'éthylène,

– de 0 à 14% environ en moles de motifs dérivés d'au moins un ester de l'acide acrylique et/ou méthacrylique, et

– de 0,3 à 3% environ en moles de motifs dérivés d'un anhydride d'acide dicarboxylique insaturé, et de 99 à 1% environ en poids d'au moins un copolymère (B2) comprenant :

   – de 80 à 99% environ en moles de motifs dérivés de l'éthylène, et

   – de 1 à 20% environ en moles de motifs dérivés d'au moins un ester choisi parmi les acrylates et méthacrylates d'alkyle, ledit groupe alkyle ayant de 1 à 6 atomes de carbone.

Les copolymères (B2) peuvent être obtenus par copolymérisation par voie radicalaire d'un mélange d'éthylène et d'au moins un ester de l'acide acrylique et/ou méthacrylique, par exemple un (méth)acrylate d'alkyle dont le radical alkyle possède de 1 à 8 atomes de carbone, par exemple selon un des procédés décrits dans les documents FR-A-2 569 411 et FR-A-2 569 412.

Il est également possible d'utiliser en tant que copolymère (B) un polymère tel que décrit dans le document FR-A-2 612 920, d'indice de fluidité avantageusement compris entre 1 et 20 dg/min. environ, et comprenant :

   – de 83 à 99,7% en moles de motifs dérivés de l'éthylène,

   – de 0 à 13,6% en moles de motifs dérivés d'au moins un acrylate ou méthacrylate d'alkyle dont le groupe alkyle contient de 1 à 12 atomes de carbone,

   – de 0,29 à 3% en moles de motifs dérivés d'au moins un anhydride d'acide dicarboxylique insaturé, et

   – de 0,01 à 0,4% en moles de motifs dérivés d'au moins un poly(méth)acrylate de polyol (produit de la réaction d'estérification au moins partielle d'un polyol par l'acide acrylique ou méthacrylique).

Ce dernier polymère peut être associé à un copolymère d'éthylène et d'anhydride d'acide dicarboxylique insaturé et/ou à un terpolymère (B1) et/ou à un copolymère (B2) tels que définis ci-dessus.

Le copolymère (B) peut aussi être un copolymère greffé comprenant au moins 80% en poids de motifs dérivés de l'éthylène et au plus 20% en poids de motifs dérivés de l'anhydride d'acide dicarboxylique insaturé, obtenu par réaction dudit anhydride sur un homopolymère de l'éthylène en présence d'un initiateur de radicaux libres.

L'initiateur de radicaux libres susceptible de modifier le copolymère (A) est choisi parmi les peroxydes, hydroperoxydes, peresters et dérivés azoïques. On citera plus particulièrement les peroxydes à structure alkylaromatique.

Par quantité efficace d'initiateur de radicaux libres, on entend une quantité d'au moins 0,01 millimole par kg de copolymère (A), de préférence une quantité comprise entre 0,2 et 0,8% en poids par rapport au copolymère (A). On évitera des quantités trop importantes qui risqueraient de conduire à une réticulation totale ou à une fragmentation du copolymère (A).

Le composé capable de réagir avec les fonctions anhydride du copolymère (B) est de préférence choisi parmi les composés comportant au moins une fonction amine primaire ou au moins deux fonctions amine secondaire, ou au moins deux fonctions alcool, ou au moins une fonction amine primaire ou secondaire et au moins une fonction alcool primaire. On citera par exemple les alcool-amines telles que la diéthanolamine, les diamines primaires comme la 4,4'-méthylènedianiline, les diamines secondaires comme la diorthotolylguanidine. On peut également utiliser des composés comportant au moins une fonction époxyde par molécule, de préférence au moins deux, comme le diglycidyléther du bis-phénol A, les copolymères d'éthylène et de (méth)acrylate de glycidyle, le cas échéant en présence d'un accélérateur tel qu'une amine tertiaire. Par modification du copolymère (B) on entend une réticulation au moins partielle, le composé capable de réagir avec les fonctions anhydride du copolymère (B) étant désigné ci-après "agent réticulant".

Par quantité efficace d'agent réticulant on entend une quantité capable de réaliser un nombre de pontages suffisant pour conférer une amélioration des propriétés visées à la composition selon l'invention. Avantageusement cette quantité est telle que le rapport

$$\text{molaire} \quad \frac{\text{fonctions réactives de l'agent réticulant}}{\text{fonctions anhydride du copolymère (B)}} \quad \text{soit}$$

compris entre 0,5 et 2, de préférence entre 0,8 et 1,2.

Les compositions selon l'invention peuvent encore comprendre des quantités efficaces d'additifs tels que des stabilisants, des agents de démoulage, des lubrifiants, des plastifiants, des pigments ou des charges minérales, en des quantités avantageusement comprises entre 0,1 et 5% en poids par rapport à la composition.

Un second objet de l'invention consiste en un procédé de préparation des compositions décrites ci-dessus, caractérisé en ce qu'il consiste à réaliser un mélange homogène du copolymère (A), du copolymère (B) et de

4

l'initiateur et/ou du composé capable de modifier respectivement le copolymère (A) et le copolymère (B) dans un malaxeur à une température comprise entre 150 et 290°C environ. La composition obtenue peut alors être extrudée et transformée en granulés dont la transformation en articles industriels est réalisée ultérieurement.

Selon un mode particulier de réalisation concernant la modification du copolymére (B), le procédé selon l'invention consiste successivement à :

a) réaliser un mélange homogène, à une température comprise entre l'ambiante et 150°C, de copolymère (B2) et d'agent réticulant,

b) ajouter le copolymère (B) au mélange obtenu, à une température comprise entre l'ambiante et 150°C,

c) ajouter le copolymère (A) au mélange obtenu, à une température comprise entre 150 et 290°C environ.

Avantageusement le mélange obtenu après l'étape (a) est extrudé et transformé en granulés. D'autre part le copolymère (B) et le copolymère (A) sont eux aussi utilisés sous forme de granulés. Les étapes b) et c) n'en forment alors plus qu'une qui consiste d'abord à réaliser à température ambiante un mélange homogène des granulés des trois produits et ensuite à introduire ce mélange dans un malaxeur, à le fondre à une température comprise entre 150 et 290°C puis à le transformer en objets finis ou bien en granulés prêts à l'emploi.

Selon une autre variante, spécifique à la modification du copolymère (A) et le procédé consiste dans un premier temps à porter à une température comprise entre 100 et 230°C pendant une durée comprise entre 3 et 10 minutes, un mélange de copolymère (A) et d'initiateur de radicaux libres, puis à introduire dans ce mélange un copolymère (B), le cas échéant accompagné de la quantité efficace du composé capable de le modifier, et à mélanger le tout à une température comprise entre 150 et 290°C pendant une durée comprise entre 3 et 10 minutes.

On opère avantageusement sur une calandre ou dans une extrudeuse à double alimentation dans laquelle on introduit des mélanges préparés à sec, d'une part de granulés de copolymère (A) et d'initiateur de radicaux libres et d'autre part, quand le mélange précédent a atteint une température d'au moins 150°C, un mélange à sec de copolymère (B) et d'agent réticulant.

Les éventuels additifs évoqués ci-dessus sont avantageusement introduits lors de la préparation des mélanges à sec.

Après calandrage ou malaxage dans un mélangeur interne ou une extrudeuse, les compositions obtenues sont transformées en articles industriels par toute technique connue comme le moulage sous presse, l'injection, ou bien en granulés prêts à l'emploi.

Les articles industriels obtenus peuvent être des feuilles, des plaques, des profilés, des tubes et tuyaux présentant, par rapport au copolymère (A), une résistance à l'abrasion et une tenue à la flexion alternée nettement améliorées.

Les exemples suivants sont destinés à illustrer l'invention de façon non limitative.

Les copolymères et réactifs suivants ont été utilisés. Les indices de fluidité standards des copolymères ont été mesurés selon la norme ASTM D 1238 condition E.

On a utilisé :

– en tant que copolymère (A) :

– un terpolymère d'éthylène, de propylène et de butène-1 (ci-après désigné A1) ayant une densité de 0,870, un indice de fluidité standard de 1,8 dg/min., une teneur en motifs dérivés, respectivement, de l'éthylène : 78% en moles, de propylène : 12% en moles, de butène-1 : 10% en moles, une température de fusion cristalline J égale à 109°C, un taux de cristallinité résiduelle de 5%, un indice de polydispersité $Mw/Mn$ égal à 4,5 ;

– un terpolymère d'éthylène, de propylène et de butène-1 (ci-après désigné A2) ayant les mêmes caractéristiques que le terpolymère A1 ci-dessus sauf l'indice de fluidité égal à 4 dg/min. et l'indice de polydispersité égal à 4,8 ;

– en tant que copolymère (B) un terpolymère (B1) d'éthylène, d'acrylate d'éthyle (30% en poids) et d'anhydride maléique (2% en poids) ayant un indice de fluidité standard égal à 4 dg/min. ;

– en tant que copolymère (B2) : un copolymère d'éthylène (72% en poids) et d'acrylate de n-butyle (28% en poids) ayant un indice de fluidité standard égal à 5 dg/min. ;

– en tant que modificateur du copolymère (A) : le peroxyde commercialisé sous la dénomination PERKADOX® Y 14/96 (ci-après désigné P) ;

– en tant qu'agent réticulant du copolymère (B) la diéthanolamine (ci-après désignée DEA).

Toutes les quantités, sauf indication contraire, sont exprimées en parties en poids.

Les compositions sont transformées en plaques par moulage sous presse à 190°C pendant 1 minutes sous une pression de 1 bar, puis 4 minutes sous une pression de 250 bars, puis sous presse froide (20°C, 100 bars, 4 minutes). Les plaques obtenues, en épaisseur de 4 mm, sont soumises aux tests suivants :

– la résistance à l'abrasion (R.A.) selon la norme NF G 62001, exprimée en mm$^3$ (le résultat est d'autant meilleur que la valeur obtenue est plus faible),

– la résistance à la flexion alternée DEMATTIA (R.F.) selon la norme NF G 46016, mesurée à 20°C et exprimée en nombre de flexions au bout duquel il y a apparition d'une fissure de 16 mm de longueur, lorsque le nombre de flexions est inférieur à 100 000.

EXEMPLES 1 et 2 (Comparatifs)

Les compositions contiennent uniquement le copolymère (A), respectivement les copolymères A1 et A2 et sont transformées en plaques selon le processus décrit ci-dessus. Les résultats des mesures effectuées sont indiqués au tableau ci-après.

EXEMPLE 3

Avec les quantités précisées au tableau ci-après, on a préparé d'une part un mélange à sec du copolymère A2 et du peroxyde P et, d'autre part, un mélange à sec du copolymère B1 et du copolymère B2. Sur une calandre dont la température est de 200°C, on admet d'abord le premier mélange pendant 4 minutes puis le second pendant 4 minutes. La composition sortant de la calandre est ensuite transformée en plaques selon le processus indiqué ci-dessus. Les résultats des mesures effectuées figurent au tableau ci-après.

EXEMPLES 4 et 5

On a d'abord réalisé un mélange-maître (ci-après MM1) comprenant 96% en poids du copolymère B2 et 4% en poids de diéthanolamine par malaxage des deux constituants en mélangeur interne pendant 3 minutes à 80°C.

A partir du mélange-maître MM1 on a préparé le mélange-maître MM2 par mélange au tonneau de 16,7% en poids du mélange-maître MM1 et 83,3% de terpolymère B1.

Les compositions ont ensuite été préparées par homogénéisation au tonneau pendant 20 minutes de granulés de copolymère (A), respectivement A1 et A2 et de mélange-maître MM2. Les granulés homogènes ont été extrudés sur une extrudeuse monovis B60 TROESTER à 210°C, à une vitesse de vis de 30 tours par minute et les compositions obtenues ont été transformées en plaques selon le processus décrit ci-dessus. Les résultats des mesures effectuées sur les plaques figurent au tableau ci-après.

EXEMPLES 6 et 7

Selon ces exemples les compositions comportent successivement la modification du copolymère de type (A) par le peroxyde P et la modification du terpolymère B1 par la diéthanolamine. Elles sont obtenues par passage sur calandre d'un mélange à sec de copolymère A et de peroxyde P à 200°C pendant 4 minutes, suivi par le passage sur la même calandre d'un mélange de terpolymère B1 et de mélange-maître MM2, pendant 4 minutes à 200°C. Les compositions sont ensuite transformées en plaques comme indiqué ci-dessus. Les résultats des mesures effectuées sont rassemblés au tableau ci-après.

TABLEAU

| EXEMPLE | CONSTITUANTS DES COMPOSITIONS EN % EN POIDS | | | | | | R.A. | R.F. |
|---------|------|------|------|------|------|------|------|------|
|         | A1   | A2   | B1   | B2   | P    | DEA  |      |      |
| 1       | 100  | –    | –    | –    | –    | –    | 161  | $10^4$ |
| 2       | –    | 100  | –    | –    | –    | –    | 618  | $3,2.\ 10^4$ |
| 3       | –    | 75,5 | 20   | 4    | 0,5  | –    | 301  | $>10^5$ |
| 4       | 76   | –    | 20   | 3,84 | –    | 0,16 | 118  | $>10^5$ |
| 5       | –    | 76   | 20   | 3,84 | –    | 0,16 | 213  | $>10^5$ |
| 6       | 75,5 | –    | 20   | 3,84 | 0,5  | 0,16 | 95   | $>10^5$ |
| 7       | –    | 75,5 | 20   | 3,84 | 0,5  | 0,16 | 126  | $>10^5$ |

## Revendications

**1 -** Compositions comprenant au moins 60% en poids d'au moins un copolymère (A) d'éthylène et d'au moins une alpha-oléfine comportant de 3 à 10 atomes de carbone, et au plus 40% en poids d'au moins un copolymère (B) à base d'éthylène et d'au moins un anhydride d'acide dicarboxylique insaturé, caractérisées en ce que :
- le copolymère (A) possède une densité comprise entre 0,850 et 0,890,
- le copolymère (B) comprend au moins 80% en moles de motifs dérivés de l'éthylène et au moins 0,1% en moles de motifs dérivés de l'anhydride d'acide dicarboxylique insaturé, et
- au moins l'un des copolymères (A) et (B) est modifié au moyen d'une quantité efficace soit d'au moins un initiateur de radicaux libres si la modification porte sur le copolymère (A), soit d'au moins un composé capable de réagir avec les fonctions anhydride du copolymère (B).

**2 -** Compositions selon la revendication 1, caractérisées en ce que le copolymère (A) comprend 9 à 23% en moles d'au moins une alpha-oléfine choisie parmi le propylène et le butène-1.

**3 -** Compositions selon l'une des revendications 1 et 2, caractérisées en ce que le copolymère (A) possède une température de fusion cristalline J comprise entre 100°C et 125°C.

**4 -** Compositions selon l'une des revendications 1 à 3, caractérisées en ce que le copolymère (A) possède un indice de polydispersité compris entre 3,5 et 15.

**5 -** Compositions selon l'une des revendications 1 à 4, caractérisées en ce que le copolymère (A) possède un indice de fluidité standard compris entre 0,3 et 15 dg/min.

**6 -** Compositions selon l'une des revendications 1 à 5, caractérisées en ce que le copolymère (A) possède un taux de cristallinité résiduelle compris entre 3 et 15%.

**7 -** Compositions selon l'une des revendications 1 à 6, caractérisées en ce que le copolymère (B) est un copolymère non greffé d'éthylène et d'au moins un anhydride d'acide dicarboxylique insaturé comprenant de 97 à 99,7% en moles de motifs dérivés de l'éthylène et de 0,3 à 3% en moles de motifs dérivés d'anhydride d'acide dicarboxylique insaturé.

**8 -** Compositions selon l'une des revendications 1 à 6, caractérisées en ce que le copolymère (B) comprend :
- de 83 à 98,7% en moles de motifs dérivés de l'éthylène,
- de 1 à 14% en moles de motifs dérivés d'au moins un ester de l'acide acrylique et/ou méthacrylique, et
- de 0,3 à 3% en moles de motifs dérivés d'au moins un anhydride d'acide dicarboxylique insaturé.

**9 -** Compositions selon l'une des revendications 1 à 6, caractérisées en ce que le copolymère (B) est un mélange de 1 à 99% environ en poids d'au moins un copolymère comprenant :
- de 83 à 99,7% en moles de motifs dérivés de l'éthylène,
- de 0 à 14% en moles de motifs dérivés d'au moins un ester de l'acide acrylique et/ou méthacrylique, et
- de 0,3 à 3% en moles de motifs dérivés d'un anhydride d'acide dicarboxylique insaturé,
et de 99 à 1% en poids d'au moins un copolymère (B2) comprenant :
- de 80 à 99% en moles de motifs dérivés de l'éthylène, et
- de 1 à 20% en moles de motifs dérivés d'au moins un ester choisi parmi les acrylates et méthacrylates d'alkyle, ledit groupe alkyle ayant de 1 à 6 atomes de carbone.

**10 -** Compositions selon l'une des revendications 1 à 6, caractérisées en ce que le copolymère (B) comprend :
- de 83 à 99,7% en moles de motifs dérivés de l'éthylène,
- de 0 à 13,6% en moles de motifs dérivés d'au moins un acrylate ou méthacrylate d'alkyle dont le groupe alkyle contient de 1 à 12 atomes de carbone,
- de 0,29 à 3% en moles de motifs dérivés d'au moins un anhydride d'acide dicarboxylique insaturé, et
- de 0,01 à 0,4% en moles de motifs dérivés d'au moins un poly(méth)acrylate de polyol.

**11 -** Compositions selon l'une des revendications 1 à 10, caractérisées en ce que l'initiateur de radicaux libres capable de modifier le copolymère (A) est un peroxyde.

**12 -** Compositions selon la revendication 11, caractérisées en ce que la quantité de peroxyde utilisée est comprise entre 0,2 et 0,8% en poids par rapport au copolymère (A).

**13 -** Compositions selon l'une des revendications 1 à 12, caractérisées en ce que le réactif susceptible de réagir avec les groupements fonctionnels polaires du copolymère (B) est la diéthanolamine.

**14 -** Compositions selon l'une des revendications 1 à 13, caractérisées en ce que la quantité de réactif utilisée pour modifier le copolymère (B) est telle que le

$$\text{rapport molaire}\quad\frac{\text{fonctions réactives de l'agent réticulant}}{\text{fonctions anhydride du copolymère (B)}}$$

soit compris entre 0,5 et 2.

**15** - Procédé de préparation d'une composition conforme à l'une des revendications 1 à 14 caractérisé en ce qu'il consiste à réaliser un mélange homogène du copolymère (A), du copolymère (B) et de l'initiateur et/ou du composé capable de modifier respectivement le copolymère (A) et le copolymère (B) dans un malaxeur à une température comprise entre 150 et 290°C.

**16** - Procédé selon la revendication 15, caractérisé en ce qu'il consiste successivement à :

a) réaliser un mélange homogène, à une température comprise entre l'ambiante et 150°C, de copolymère (B2) et du composé capable de modifier le copolymère (B),

b) ajouter le copolymère (B) au mélange obtenu, à une température comprise entre l'ambiante et 150°C,

c) ajouter le copolymère (A) au mélange obtenu, à une température comprise entre 150 et 290°C environ.

**17** - Procédé selon la revendication 15, caractérisé en ce qu'il consiste dans un premier temps à porter à une température comprise entre 100 et 230°C pendant une durée comprise entre 3 et 10 minutes, un mélange de copolymère (A) et d'initiateur de radicaux libres, puis à introduire dans ce mélange un copolymère (B), le cas échéant accompagné de la quantité efficace du composé capable de le modifier, et à mélanger le tout à une température comprise entre 150 et 290°C pendant une durée comprise entre 3 et 10 minutes.

**18** - Articles industriels obtenus par transformation d'une composition conforme à l'une des revendications 1 à 14.

EP 0 442 233 A1

Office européen
des brevets

RAPPORT DE RECHERCHE EUROPEENNE

Numero de la demande

EP 90 40 3649

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 312 664 (NORSOLOR)<br>* Revendications 1,5,7 *<br>--- | 1 | C 08 L 23/04 //<br>(C 08 L 23/04<br>C 08 L 23:08 ) |
| A | GB-A-2 195 347 (NIPPON OIL)<br>* Revendications 1-2 *<br>--- | 1 | |
| A | EP-A-0 308 131 (NIPPON PETROCHEMICALS)<br>* Résumé *<br>--- | 1 | |
| A | EP-A-0 057 238 (MITSUI PETROCHEMICAL)<br>* Page 7, lignes 33-36 *<br>----- | 1 | |

DOMAINES TECHNIQUES
RECHERCHES (Int. Cl.5)

C 08 L

Le présent rapport a été établi pour toutes les revendications

| Lieu de la recherche | Date d'achèvement de la recherche | Examinateur |
|---|---|---|
| LA HAYE | 16-05-1991 | GOOVAERTS R.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

I : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9